(19) Europäisches Patentamt
European Patent Office
Office européen des brevets

(11) **EP 2 993 344 A1**

(12) **EUROPEAN PATENT APPLICATION**

(43) Date of publication:
**09.03.2016 Bulletin 2016/10**

(51) Int Cl.:
***F03D 13/00*** *(2016.01)*

(21) Application number: **15159764.8**

(22) Date of filing: **19.03.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **02.09.2014 JP 2014178158**

(71) Applicant: **MITSUBISHI HEAVY INDUSTRIES, LTD.
Tokyo 108-8215 (JP)**

(72) Inventors:
• **Mizoue, Taketo
TOKYO, 108-8215 (JP)**
• **Ichinose, Hidekazu
TOKYO, 108-8215 (JP)**
• **Maruyama, Tatsuhiro
TOKYO, 108-8215 (JP)**

(74) Representative: **Intès, Didier Gérard André et al
Cabinet Beau de Loménie
158, rue de l'Université
75340 Paris Cedex 07 (FR)**

(54) **Fatigue evaluation system for wind turbine power generating facility**

(57) A fatigue evaluation system includes: a cumulative damage level calculation part configured to calculate a cumulative damage level $D_u$ of each evaluation point in a unit period ; a total cumulative damage level calculation part which adds up calculation results of the cumulative damage level calculation part over an entire evaluation period to calculate a total cumulative damage level $D_t$ of the entire evaluation period for each of the evaluation points; and a fatigue evaluation part configured to compare the total cumulative damage level $D_t$ to a threshold value and evaluate fatigue of each evaluation point. The cumulative damage level calculation part calculates the cumulative damage level $D_u$ from the following equation (1).

$$D_u = \Sigma \frac{n_i}{N_i} \qquad (1)$$

$N_i$ is a fracture repetition number corresponding to the stress amplitude $F_i$, calculated by the following equation (2).

$$N_i = N_{Ref} \times \left( \frac{F_{Ref}}{F_i} \right)^m \qquad (2)$$

$N_{Ref}$ is a fracture repetition number corresponding to a reference stress amplitude $F_{Ref}$. m is a slope of a function which represents a relationship between the fracture repetition number $N_i$ and the stress amplitude $F_i$ in the information of the S-N linear chart.

Printed by Jouve, 75001 PARIS (FR)

(Cont. next page)

# FIG. 1

**Description**

TECHNICAL FIELD

The present invention relates to a fatigue evaluation system for a wind turbine power generating facility.

BACKGROUND

Wind turbine power generating facilities utilizing wind as renewable energy to generate power have become widely used in recent years in view of preservation of the global environment. A wind turbine power generating facility generally includes a rotor including a plurality of rotor blades for receiving wind energy and a rotor hub, a generator to which rotational force of the rotor is transmitted via a drive train, a nacelle which rotatably supports the rotor and accommodates the generator, a tower which supports the nacelle, and the like.

Patent Document 1 discloses a monitoring system for a wind turbine power generating facility, configured to evaluate fatigue of components of the wind turbine power generating facility such as rotor blades and a drive train using a rain-flow process.

Citation List

Patent Literature

Patent Document 1: EP 1760311

SUMMARY

Patent Document 1, however, does not describe a specific evaluation method such as a calculation method of cumulative damage degree for evaluating fatigue, and does not sufficiently disclose findings for appropriately evaluating fatigue of each part of the wind turbine power generating facility.

The present invention was made in view of the above issues of the conventional technique. An object of at least one embodiment of the present invention is to provide a fatigue evaluation system for a wind turbine power generating facility which enables appropriate fatigue evaluation of each part of a wind turbine power generating facility.

(1) A fatigue evaluation system for a wind turbine power generating facility according to one embodiment of the present invention includes: a stress change information acquisition part configured to obtain stress change information which indicates a temporal change, within a unit period, of stress which is generated on each of evaluation points of the wind turbine power generating facility; a stress amplitude information calculation part configured to calculate stress amplitude $F_i$ and a repetition number $n_i$ of the stress amplitude $F_i$ of the stress generated on each of the evaluating points within the unit period, on the basis of the stress change information obtained by the stress change information acquisition part; a cumulative damage level calculation part configured to calculate a cumulative damage level $D_u$ of each of the evaluation points within the unit period, on the basis of the calculation result calculated by the stress amplitude information calculation part and information of a S-N linear chart which corresponds to a material of each of the evaluation points; a total cumulative damage level calculation part configured to add up calculation results of the cumulative damage level calculation part over an entire evaluation period to calculate a total cumulative damage level $D_t$ of the entire evaluation period for each of the evaluation points; and a fatigue evaluation part configured to compare the total cumulative damage level $D_t$ at each of the evaluation points calculated by the total cumulative damage level calculation part to a threshold value, and evaluate fatigue of a part of the wind turbine power generating facility to which each of the evaluation points belongs. The cumulative damage level calculation part is configured to calculate the cumulative damage level $D_u$ from the following equation (1).

$$D_u = \Sigma \frac{n_i}{N_i} \qquad (1)$$

In the above equation (1), $N_i$ is a fracture repetition number which corresponds to the stress amplitude $F_i$, and which is calculated by the following equation (2).

$$N_i = N_{Ref} \times \left( \frac{F_{Ref}}{F_i} \right)^m \qquad (2)$$

In the above equation (2), $N_{Ref}$ is a fracture repetition number corresponding to a reference stress amplitude $F_{Ref}$, and m is a slope of a function representing a relationship between the fracture repetition number $N_i$ and the stress amplitude $F_i$ in the information of the S-N linear chart.

With the fatigue evaluation system described in the above (1), it is possible to calculate the appropriate total cumulative damage level $D_t$ taking account of the cumulative fatigue damage rule at each evaluation point, on the basis of the stress amplitude $F_i$ and the repetition number $n_i$ of the stress amplitude $F_i$ of the stress generated on each evaluation point in a unit period in the wind turbine power generating facility, and the information of the S-N linear chart corresponding to the material of each evaluation point.

Thus, it is possible to appropriately evaluate fatigue of a part to which each evaluation belongs on the basis of the cumulative fatigue damage rule, by comparing the total cumulative damage level $D_t$ to a threshold value.

Accordingly, for instance, when it is anticipated that the residual life time of a part corresponding to one of the evaluation points would be over before the next regular maintenance, the next maintenance is advanced, or the operation rate of the wind turbine power generating facility is reduced to extend the residual life time to the next regular maintenance. As a result, it is possible to prevent unexpected shutdown due to damage of a part of the wind turbine power generating facility, for instance.

(2) In some embodiments, the fatigue evaluation system described in the above (1) further includes a warning signal generation part configured to generate a warning signal when the total cumulative damage level $D_t$ of at least one of the evaluating points calculated by the total cumulative damage level calculation part has exceeded the threshold value.

When the total cumulative damage level $D_t$ exceeds a predetermined value, the risk of damage is increased. Thus, with the the fatigue evaluation system described in the above (2) where the warning signal generation part generates a warning signal for warning in the above situation, it possible to take an appropriate measure such as shutdown and maintenance of the wind turbine power generating facility in response to the warning.

(3) In some embodiments, in the fatigue evaluation system described in the above (2), the warning signal generation part is configured to generate the warning signal also when an increasing speed of the total cumulative damage level $D_t$ of at least one of the evaluation points calculated by the total cumulative damage level calculation part has exceeded a tolerance.

When the increasing speed of the total cumulative damage level $D_t$ of at least one of the evaluation points of the wind turbine power generating facility has exceeded a tolerance, it is presumed that an abnormal event that causes an unexpected stress distribution has occurred in the wind turbine power generating facility. Thus, the warning signal generation part of the fatigue evaluation system described in the above (3) generates a warning signal for warning in such a situation, so that it possible to take an appropriate measure such as shutdown and maintenance of the wind turbine power generating facility in response to the warning.

(4) In some embodiments, in the fatigue evaluation system described in any one of the above (1) to (3), the threshold value is 1.

With the fatigue evaluation system described in the above (4), the total cumulative damage level $D_t$ of each evaluation point calculated by the total cumulative damage level calculation part is compared to 1, which is a value indicating the design life time. In this way, it is possible to accurately obtain the residual life time of a part to which each evaluation point belongs, on the basis of the cumulative fatigue damage rule.

(5) In some embodiments, in the fatigue evaluation system described in any one of the above (1) to (3), the threshold value increases with an elapsed time after starting operation of the wind turbine power generating facility.

The total cumulative damage level $D_t$ at each evaluation point increases with an elapsed time after starting operation of the wind turbine power generating facility. Thus, at a certain point of time, it is necessary to appropriately vary the threshold value, which is to be compared to the total cumulative damage level $D_t$, in accordance with the elapsed time after starting operation of the wind turbine power generating facility to appropriately determine whether the total cumulative damage level $D_t$ at each evaluation point is a normal value. In this regard, with the above fatigue evaluation system described in the above (5), the threshold value, which is to be compared to the total cumulative damage level $D_t$, is increased in accordance with the elapsed time after starting operation of the wind turbine power generating facility, which makes it possible to appropriately determine whether the total cumulative damage level $D_t$ at each evaluation point is a normal value, at a certain point of time.

(6) In some embodiments, in the fatigue evaluation system described in any one of the above (1) to (5), the unit period is a period of not less than 1 minute and not more than 600 minutes.

The shorter the unit period for calculating the cumulative damage level $D_u$ is, the more frequently it is possible to execute the fatigue evaluation based on the cumulative damage level. Thus, even when an abnormal event that leads to a rapid increase in the total cumulative damage level $D_t$ is caused in the wind turbine power generating facility, it is possible to detect the abnormality quickly and to take an appropriate measure such as shutdown and maintenance of the wind turbine power generating facility. However, the shorter the unit period for calculating the cumulative damage level $D_u$ is, the larger the load of calculation would be in the cumulative damage level calculation part and the total cumulative damage level calculation part. In this regard, with the fatigue evaluation system described in the above (6), it is possible to calculate the cumulative damage level $D_u$ at the optimum frequency, considering both the above load of calculation and the risk of delay in detection of an abnormality that may lead to a rapid increase in the total cumulative damage level $D_t$ in the wind turbine power generating facility.

(7) In some embodiments, in the fatigue evaluation system described in any one of the above (1) to (6), at least one of the evaluation points belongs to one of a top part of a tower, a bottom part of the tower, a rotor hub, or a rotor blade.

With the fatigue evaluation system described in the above (7), it is possible to calculate the appropriate total cumulative damage level $D_t$ in consideration of the cumulative fatigue damage rule at major locations with the risk of fracture in the wind turbine power generating facility. Thus, comparing the total cumulative damage level $D_t$ to the threshold value makes it possible to appropriately evaluate fatigue of the major locations with the risk of fracture on the basis of the cumulative fatigue damage rule.

(8) In some embodiments, in the fatigue evaluation system described in any one of the above (1) to (7), the wind turbine power generating facility includes a plurality of rotor blades mounted to the rotor hub, and each of the rotor blades includes at least one of the evaluation points. Also, the fatigue evaluation system further comprises a defect determination part configured to determine a defect of each of the rotor blades, by comparing the total cumulative damage level $D_t$ of the at least one evaluation point of each of the rotor blades, calculated by the total cumulative damage level calculation part, to one another.

In a case where the wind turbine power generating facility includes a plurality of rotor blades, the time average values (average values over a time longer enough than the rotational period of the rotor) of stress generated on the identical locations (for instance, the blade root portion of one rotor blade and the blade root portion of another rotor blade) of the rotor blades are basically substantially the same, because the rotor rotates. Thus, for instance, it is possible to determine the defect of each rotor blade by comparing the total cumulative damage levels $D_t$ of the evaluation points belonging to the rotor blades to one another.

(9) In some embodiments, in the fatigue evaluation system described in any one of the above (1) to (8), the stress amplitude information calculation part is configured to calculate the stress amplitude $F_i$ and repetition number $n_i$ of the stress amplitude $F_i$ of the stress generated on each of the evaluation points within the unit period, by executing a rain flow process on the stress change information obtained by the stress change information acquisition part.

With the fatigue evaluation system described in the above (9), it is possible to calculate the stress amplitude $F_i$ and the repetition number $n_i$ of the stress amplitude $F_i$ accurately by executing a rain flow process on the stress change information acquisition part.

(10) In some embodiments, the fatigue evaluation system described in the above (1) to (9) further includes a display part configured to display a graph of the total cumulative damage level $D_t$ of each of the evaluation points calculated by the total cumulative damage level calculation part.

With the fatigue evaluation system described in the above (10), displaying a graph of the total cumulative damage levels $D_t$ of the respective evaluation points as described above makes it possible for an operator to visually determine the total cumulative damage levels $D_t$ of the respective evaluation points. Thus, it is possible for the operator to easily determine the residual lifetime or the like at each evaluation point of the wind turbine power generating facility, on the basis of the displayed graph of the total cumulative damage levels $D_t$. As a result, it is possible for the operator to take an appropriate measure such as shutdown and maintenance of the wind turbine power generating facility.

(11) In some embodiments, the fatigue evaluation system described in the above (1) to (10) further includes a measurement device for measuring the stress generated on each of the evaluation points of the wind turbine power generating facility. The stress change information acquisition part is configured to obtain the stress change information from the measurement device.

With the fatigue evaluation system described in the above (11), it is possible for the stress change information acquisition part to obtain the stress change information related to the real-time stress generated at each evaluation point of the wind turbine power generation facility via the measurement device. In this way, on the basis of the stress change information related to the real-time stress generated at each evaluation point, it is possible to calculate the total cumulative damage level $D_t$ at each evaluation point after a start of operation of the wind turbine power generating facility and before the current time with the total cumulative damage level calculation part. Thus, comparing the total cumulative damage level $D_t$ calculated as described above to the threshold value corresponding to e.g. the design life time makes it possible to accurately evaluate the residual life time of each part of the wind turbine power generating facility.

(12) In some embodiments, in the fatigue evaluation system described in the above (5), the total cumulative damage level calculation part is configured to refresh the total cumulative damage level $D_t$ every time the unit period elapses, by adding the cumulative damage level $D_u$ of a latest unit period to a previous value of the total cumulative

damage level $D_t$ for each of the evaluation points. Also, the fatigue evaluation system further includes a flag setting part configured to, when the total cumulative damage level $D_t$ of at least one of the evaluation points calculated by the total cumulative damage level calculation part has exceeded the threshold value at least once, turn on a flag which indicates that the total cumulative damage level $D_t$ has exceeded the threshold value at the at least one evaluation point.

With the fatigue evaluation system described in the above (12), it is possible to specify the point of time when the total cumulative damage level $D_t$ of the at least one evaluation point has exceeded the threshold value, on the basis of the state of the flag. Thus, for instance, it is possible to specify the cause or the like that the total cumulative damage level $D_t$ of the evaluation point has exceeded the threshold value, by referring afterward to the operability or the like at the point of time of the devices constituting the wind turbine power generating facility.

(13) In some embodiments, the fatigue evaluation system described in the above (12) further includes a measurement device for measuring the stress generated on each of the evaluation points of the wind turbine power generating facility. The stress change information acquisition part is configured to obtain the stress change information from the measurement device. Also, the flag setting part is configured to, only when the total cumulative damage level $D_t$ of at least one of the evaluation points calculated by the total cumulative damage level calculation part has exceeded the threshold value more than once in series, turn on a flag which indicates that the total cumulative damage level $D_t$ has exceeded the threshold value for the at least one evaluation point.

With the fatigue evaluation system described in the above (13), it is possible for the stress change information acquisition part to obtain the stress change information related to the real-time stress generated at each evaluation point of the wind turbine power generation facility via the measurement device. In this way, it is possible to calculate the total cumulative damage level $D_t$ at each evaluation point after a start of operation of the wind turbine power generating facility and before the current time with the total cumulative damage level calculation part, on the basis of the stress change information related to the real-time stress generated on each evaluation point.

Meanwhile, the stress change information obtained by the measurement device includes dispersion due to temporal disturbance. Thus, the calculated total cumulative damage level $D_t$ may be also affected by this dispersion. In this regard, with the above fatigue evaluation system described in the above (13), the flag indicating that the total cumulative damage level $D_t$ of the evaluation point has exceeded the threshold value is turned on only when the total cumulative damage level $D_t$ of at least one evaluation point has exceeded the threshold value more than once in series. Thus, it is possible to restrict the influence from the above dispersion from affecting the point of time when the flag is to be turned on.

(14) In some embodiments, in the fatigue evaluation system described in the above (13), the flag setting part is configured to, only when the total cumulative damage level $D_t$ of at least one evaluation point calculated by the total cumulative damage level calculation part has fallen to the threshold value or less, more than once in series, turn off the flag for the at least one evaluation point.

With the fatigue evaluation system described in the above (14), it is also possible to restrict the influence from the above dispersion from affecting the point of time when the flag is to be turned off.

(15) A wind turbine power generating facility according to one embodiment of the present invention includes: a rotor configured to rotate upon receiving wind energy; a generator to which rotational force of the rotor is transmitted; and the fatigue evaluation system according to any one of the above (1) to (14).

With the wind turbine power generating facility described in the above (15), it is possible to appropriately evaluate fatigue of a part to which each evaluation point belongs, on the basis of the cumulative fatigue damage rule, by using the fatigue evaluation system described in any one of the above (1) to (14).

Accordingly, for instance, when it is anticipated that the residual life time of a part corresponding to one of the evaluation points would be over before the next regular maintenance, the next maintenance is advanced, or the operation rate of the wind turbine power generating facility is reduced to extend the residual life time to the next regular maintenance. As a result, it is possible to prevent unexpected shutdown due to damage of each part of the wind turbine power generating facility, for instance.

According to at least one embodiment of the present invention, provided is a fatigue evaluation system of a wind turbine power generating facility capable of appropriately evaluating fatigue of each part of the wind turbine power generating facility.

BRIEF DESCRIPTION OF DRAWINGS

FIG. 1 is a schematic diagram of an overall configuration of a wind turbine power generating facility according to one embodiment of the present invention.
FIG. 2 is a diagram of an exemplary configuration of a fatigue evaluation system for a wind turbine power generating facility according to one embodiment of the present invention.

FIG. 3 is a diagram of an example of a S-N linear chart showing a relationship between the fracture repeated number N; and the stress amplitude $F_i$.

FIGs. 4 and 5 are each a chart showing an example of a setting value of the threshold value $D_{th}$ according to a least one embodiment of the present invention.

FIG. 6 is an example of a graph displayed by a display part according to one embodiment of the present invention.

FIG. 7 is a flowchart of fatigue evaluation according to one embodiment of the present invention.

DETAILED DESCRIPTION

Embodiments of the present invention will now be described with reference to the accompanying drawings. It is intended, however, dimensions, materials, shapes, relative positions and the like of components described in the embodiments or the drawings shall be interpreted as illustrative only and not limitative of the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

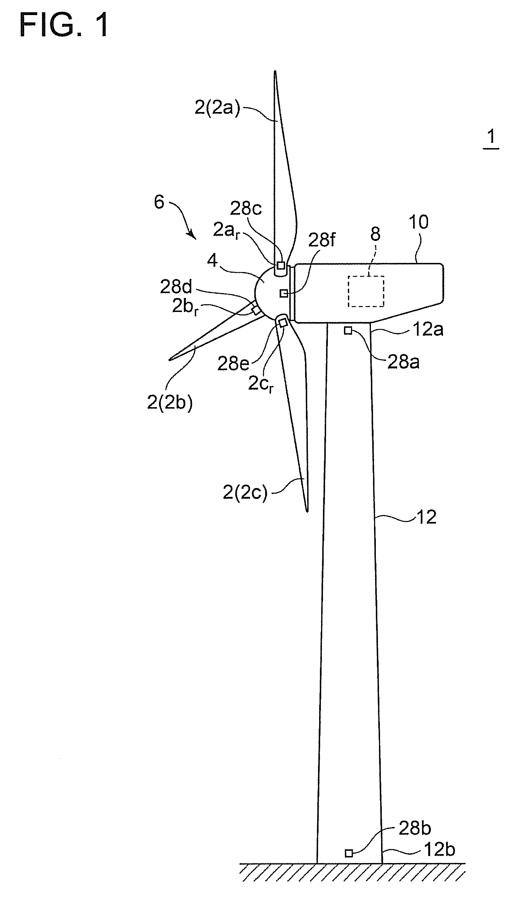

FIG. 1 is a schematic diagram of an overall configuration of a wind turbine power generating facility according to one embodiment of the present invention.

The wind turbine power generating facility 1 includes a rotor 6 including a plurality of rotor blades 2 (2a, 2b, 2c) for receiving wind energy and a rotor hub 4, a generator 8 to which rotational force of the rotor 6 is transmitted via a gearbox (not illustrated), a nacelle 10 which rotatably supports the rotor 6 and accommodates the generator 8, and a tower 12 which supports the nacelle 10.

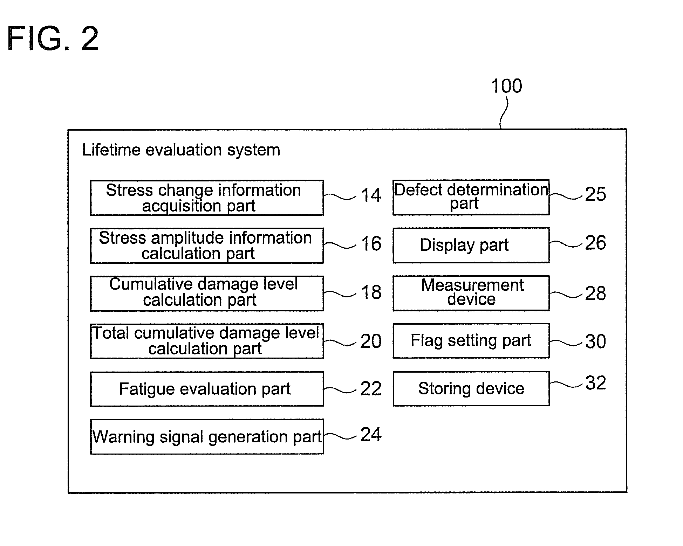

FIG. 2 is a diagram of an exemplary configuration of a fatigue evaluation system 100 for evaluating fatigue of the wind turbine power generating facility 1.

In some embodiments, the fatigue evaluation system 100 illustrated in FIG. 2 includes a stress change information acquisition part 14, a stress amplitude information calculation part 16, a cumulative damage level calculation part 18, a total cumulative damage level calculation part 20, and a fatigue evaluation part 22.

The stress change information acquisition part 14 is configured to obtain stress change information indicating the temporal change within a unit period of time of stress generated on each evaluating point of the wind turbine power generating facility 1.

The stress amplitude information calculation part 16 is configured to calculate the stress amplitude $F_i$ and the repetition number $n_i$ of the stress amplitude $F_i$ of the stress generated on each evaluation point in a unit period, on the basis of the stress change information obtained by the stress change information acquisition part 14. The unit period of time is, for instance a period of not less than 1 minute and not more than 600 minutes, or a predetermined period such as 10 minutes. In one embodiment, the stress amplitude information calculation part 16 may execute a rain flow process on the stress change information obtained by the stress change information acquisition part 14 to calculate the stress amplitude $F_i$ and the repeated number $n_i$ of the stress amplitude $F_i$, of the stress generated on each evaluation point in a unit period.

The cumulative damage level calculation part 18 is configured to calculate the cumulative damage level $D_u$ of each evaluation point within the unit period, on the basis of the calculation result calculated by the stress amplitude information calculation part 16 and the information of the S-N linear chart corresponding to the material of each evaluation point. The cumulative damage level calculation part 18 is configured to calculate the cumulative damage level $D_u$ at each evaluation point within the unit period from the following equation (1):

$$D_u = \Sigma \frac{n_i}{N_i} \qquad (1)$$

In the above equation, $N_i$ is the number of fracture repetition corresponding to the stress amplitude $F_i$, and calculated based on the following equation (2):

$$N_i = N_{Ref} \times \left(\frac{F_{Ref}}{F_i}\right)^m \qquad (2)$$

In the above equation, $N_{ref}$ is the number of fracture repetition corresponding to the reference stress amplitude $F_{ref}$, and m is a slope of a function representing a relationship of the fracture repetition number $N_i$ and the stress amplitude $F_i$ in the information of the S-N linear chart.

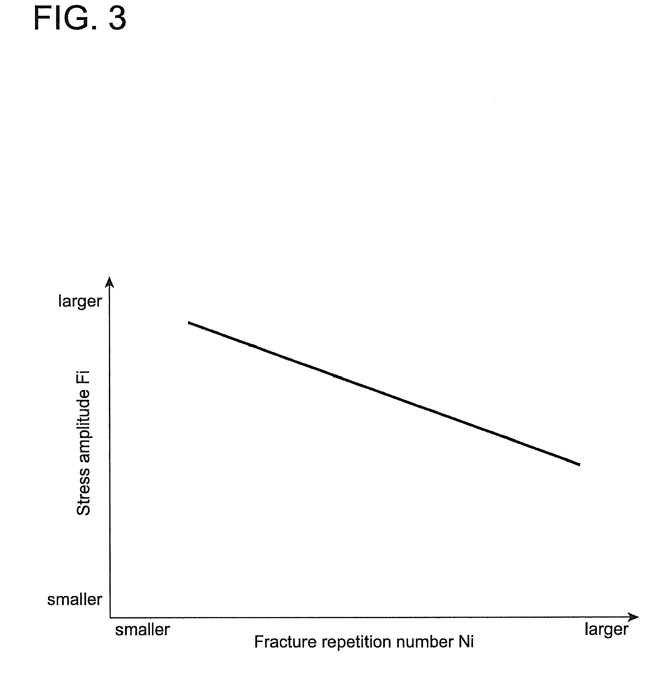

As illustrated in FIG. 3, the S-N linear chart represents how many repetition of a certain stress amplitude $F_i$ takes to cause damage. The S-N linear chart may be stored in a storing device 32 (see FIG. 2) included in the fatigue evaluation system 100 and read out when needed.

The total cumulative damage level calculation part 20 is configured to calculate the total cumulative damage level $D_t$ of the entire evaluation period at each evaluation point by adding up the calculation results calculated by the cumulative damage level calculation part 18 throughout the entire evaluation period. Further, the total cumulative damage level calculation part 20 is configured to add the cumulative damage level $D_u$ of the latest unit period to the previous value of the total cumulative damage level $D_t$ for each evaluation point to refresh the total cumulative damage level $D_t$ every time a unit period elapses. Evaluation period here may be a period corresponding the design life time of the wind turbine power generating facility 1, the cumulative usage period of the wind turbine power generating facility 1 up to the evaluation point (the present time), or a total period of the cumulative usage period and a period until the next maintenance.

The fatigue evaluation part 22 is configured to evaluate fatigue of each part of the wind turbine power generating facility 1 to which the corresponding evaluation point belongs by comparing the total cumulative damage value $D_t$ calculated by the total cumulative damage level calculation part 20 with a threshold value $D_{th}$.

With the fatigue evaluation system 100, it is possible to calculate the appropriate total cumulative damage level $D_t$ taking account of the cumulative fatigue damage rule at each evaluation point, on the basis of the stress amplitude $F_i$ and repetition number $n_i$ of the stress amplitude $F_i$ of the stress generated on each evaluation point in a unit period in the wind turbine power generating facility 1, and the information of the S-N linear chart corresponding to the material of each evaluation point. Thus, it is possible to appropriately evaluate fatigue of a part to which each evaluation belongs on the basis of the cumulative fatigue damage rule by comparing the total cumulative damage level $D_t$ to a threshold value.

Accordingly, for instance, when it is anticipated that the residual life time of a part corresponding one of the evaluation points would be over before the next regular maintenance, the next maintenance is advanced, or the operation rate of the wind turbine power generating facility 1 is reduced to extend the residual life time to the next regular maintenance. As a result, it is possible to prevent unexpected shutdown due to damage of each part of the wind turbine power generating facility 1.

In some embodiments, as illustrated in FIG. 2, the fatigue evaluation system 100 includes a warning signal generation part 24 configured to generate a warning signal when the total cumulative damage level $D_t$ of at least one of the evaluation points calculated by the total cumulative damage level calculation part 20 has exceeded the threshold value $D_{th}$.

When the total cumulative damage level $D_t$ exceeds a certain value, the risk of damage is increased. Thus, the warning signal generation part 24 generates a warning signal for warning when the total cumulative damage level $D_t$ exceeds the threshold value $D_{th}$, which makes it possible to take an appropriate measure such as shutdown and maintenance of the wind turbine power generating facility 1 in response to the warning.

The warning signal generation part 24 may be configured to generate a warning signal also when the increasing speed of the total cumulative damage level $D_t$ of at least one of the evaluation points calculated by the total cumulative damage level calculation part 20 has exceeded a tolerance.

When the increasing speed of the total cumulative damage level $D_t$ of at least one of the evaluation points of the wind turbine power generating facility 1 has exceeded a tolerance, it is presumed that an abnormal event that causes an unexpected stress distribution has occurred in the wind turbine power generating facility 1. Thus, the warning signal generation part 24 generating a warning signal for warning in such a situation makes it possible to take an appropriate measure such as shutdown and maintenance of the wind turbine power generating facility 1 in response to the warning.

In some embodiments, the threshold value $D_{th}$ is set to 1. In this case, the total cumulative damage level $D_t$ of each of the evaluation points calculated by the total cumulative damage level calculation part 20 is compared to 1, which is a value indicating the design life time, which makes it possible to accurately obtain the residual life time of a part to which each evaluation point belongs, on the basis of the cumulative fatigue damage rule.

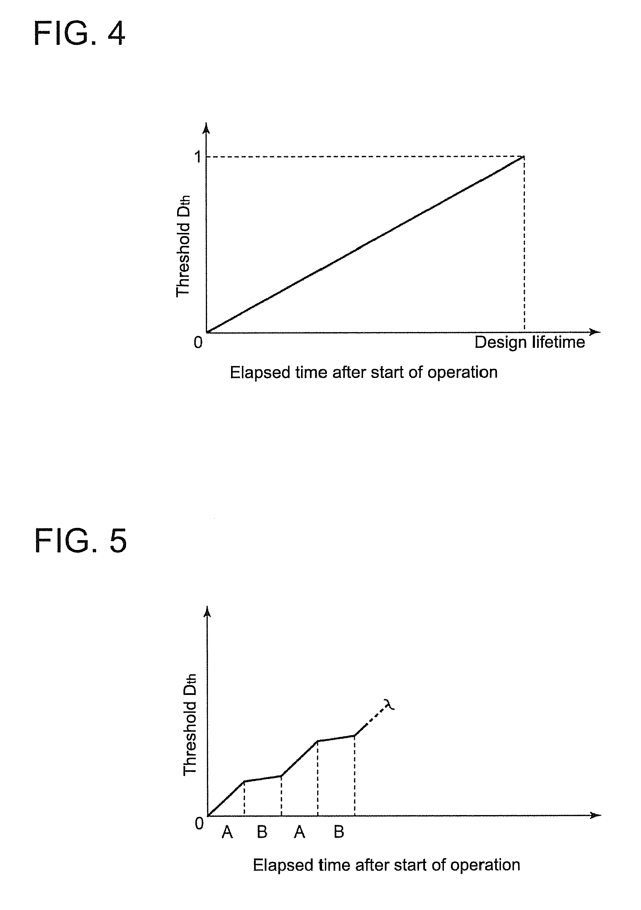

In some embodiments, as illustrated in FIGs. 4 to 5 for instance, the threshold value $D_{th}$ is set so as to increase with elapsed time after starting operation of the wind turbine power generating facility 1.

The total cumulative damage level $D_t$ at each evaluation point increases with elapsed time after starting operation of the wind turbine power generating facility 1. Thus, it is necessary to appropriately vary the threshold value $D_{th}$, which is to be compared to the total cumulative damage level $D_t$, in accordance with the elapsed time after starting operation of the wind turbine power generating facility 1 to appropriately determine whether the total cumulative damage level $D_t$ at each evaluation point is a normal value at a certain point of time. In this regard, with the above fatigue evaluation system 100, the threshold value $D_{th}$, which is to be compared to the total cumulative damage level $D_t$ at each evaluation point, is increased in accordance with the elapsed time after starting operation of the wind turbine power generating facility 1, which makes it possible to appropriately determine whether the total cumulative damage level $D_t$ at each evaluation point at a certain point of time is a normal value.

The threshold value $D_{th}$ may be set so as to increase proportional to the elapsed time before the design life time as illustrated in FIG. 3, or the increasing rate of the threshold value $D_{th}$ with respect to the above elapsed time may be varied for each period as illustrated in FIG.4 . For instance, in FIG. 4 the increase rate of the threshold value $D_{th}$ may be set to be large in a season with strong wind (period A) compared to a season with less strong wind (period B). In this way, it is possible to appropriately determine whether the total cumulative damage level $D_t$ at each evaluation point is a normal value.

In some embodiments, at least one of the evaluation points of the wind turbine power generating facility 1 belongs to one of the top part 12a of the tower 12, the bottom part 12b of the tower 12, one of the rotor blades 2, or the rotor hub 4 illustrated in FIG. 1.

In this way, it is possible to calculate the appropriate total cumulative damage level $D_t$ in consideration of the cumulative fatigue damage rule at major locations with the risk of fracture in the wind turbine power generating facility 1. Thus, comparing the total cumulative damage level $D_t$ to the threshold value $D_{th}$ makes it possible to appropriately evaluate fatigue at the major locations with the risk of fracture, on the basis of the cumulative fatigue damage rule.

In some embodiments, as illustrated in FIGs. 1 and 2 for instance, the fatigue evaluation system 100 further includes measurement devices 28 (28a to 28f) for measuring the stress generated on each evaluation point of the wind turbine power generating facility 1, and the stress change information acquisition part 14 is configured to obtain the stress change information from the measurement device 28. The measurement devices 28 (28a to 28f) here may be, as illustrated in FIG. 1, disposed on the top part 12a of the tower 12, the bottom part 12b of the tower 12, the blade root portion (2ar to 2cr) of each rotor blade 2 (2a to 2c) and the rotor hub 4, respectively. In one embodiment, each measurement device 28 (28a to 28f) is a distortion sensor or a load sensor, and the stress is measured from the detection results of the sensors.

In this way, it is possible for the stress change information acquisition part 14 to obtain the stress change information related to the real-time stress generated at each evaluation point of the wind turbine power generating facility 1 via the measurement devices 28 at the major locations with the risk of damage in the wind turbine power generating facility 1. Further, on the basis of the stress change information related to the real-time stress generated on each evaluation point, it is possible to calculate the total cumulative damage level $D_t$ at each evaluation point after a start of operation of the wind turbine power generating facility 1 and before the current time with the total cumulative damage level calculation part 20. Thus, comparing the total cumulative damage level $D_t$ calculated as described above to the threshold value $D_{th}$ corresponding to e.g. the design life time makes it possible to accurately evaluate the residual life time of each part of the wind turbine power generating facility 1.

In some embodiments, each of the plurality of rotor blades 2 includes at least one of the evaluation points of the fatigue evaluation system100 illustrated in FIG. 2. In this case, the fatigue evaluation system100 may include a defect determination part 25 (see FIG. 2) configured to compare the total cumulative damage levels $D_t$ of the evaluation points belonging to the respective rotor blades calculated by the total cumulative damage level calculation part 20 with one another to determine a defect for each of the plurality of rotor blades 2.

In a case where the wind turbine power generating facility 1 includes a plurality of rotor blades 2, the time average values (average values over a time longer enough than the rotational period of the rotor 6) of the stress generated on the evaluation points of identical locations (for instance, the blade root portion 2ar of the rotor blade 2a and the blade root portion 2br of the other rotor blade 2b) of the rotor blades 2 are basically substantially the same, because the rotor rotates. Thus, for instance, it is possible to determine the defect of each rotor blade 2 by comparing the total cumulative damage level $D_t$ of the evaluation points belonging to the rotor blade 2a of the plurality of rotor blades 2 to the total cumulative damage level $D_t$ of the evaluation point belonging to the other at least one rotor blade 2 (2b, 2c) at the identical location.

The defect determination part 25, for instance, may determine that the blade root portion 2ar of the rotor blade 2a has a defect when the total cumulative damage level $D_t$ of the evaluation point belonging to the rotor blade 2a is larger than the average value of the total cumulative damage levels $D_t$ of the evaluation points belonging to the blade root portions (2ar to 2br) of the entire rotor blades 2 at the identical location by a predetermined level or more (for instance, by a predetermined value or more, or by a predetermined multiple). Further, the defect determination part 25 may determine that the blade root portion 2ar of the rotor blade 2a has a defect when the total cumulative damage level $D_t$ of the evaluation point belonging to the rotor blade 2a is larger than the average value of the average value of the total cumulative damage level $D_t$ of the evaluation points belonging to the blade root portions (2br, 2cr) of the other rotor blades 2 (2b, 2c) at the identical location by a predetermined level or more (for instance, by a predetermined value or more, or by a predetermined multiple).

In some embodiments, the fatigue evaluation system 100 includes a display part 26 (see FIG. 2) configured to display a graph of the total cumulative damage levels $D_t$ of the respective evaluation points calculated by the total cumulative damage level calculation part 20.

Displaying a graph of the total cumulative damage levels $D_t$ of the respective evaluation points as described above makes it possible for an operator to visually determine the total cumulative damage levels $D_t$ of the respective evaluation points. Thus, on the basis of the displayed graph of the total cumulative damage levels $D_t$, it is possible for the operator to easily determine the residual lifetime or the like at each evaluation point of the wind turbine power generating facility 1. As a result, it is possible for the operator to take an appropriate measure such as shutdown and maintenance of the wind turbine power generating facility 1.

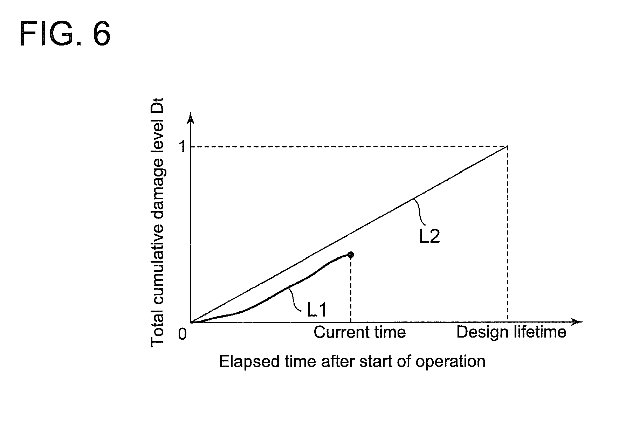

As illustrated in FIG. 6 for instance, the display part 26 may display a graph including one axis indicating the elapsed time after starting operation of the wind turbine power generating facility 1, and the other axis indicating the total cumulative damage level $D_t$ of each evaluation point. In this case, as illustrated in FIG. 6, the display part 26 may display a line L1 indicating the temporal change between the start of operation and the current time for the total cumulative damage level $D_t$ of each evaluation point actually calculated by the total cumulative damage level calculation part 20, while also displaying a design straight line L2 of the total cumulative damage level $D_t$ after starting operation and before reaching the design life time (e.g. 25 years) of the wind turbine power generating facility 1, where the total cumulative damage level $D_t$ becomes 1 at the design lifetime.

As a result, it is possible for the operator to visually determine how far the total cumulative damage level $D_t$ of each evaluation point calculated by the total cumulative damage level calculation part 20 is apart from the possible normal increasing rate of the total cumulative damage level $D_t$. Thus, it is possible for the operator to take an appropriate measure such as shutdown and maintenance of the wind turbine power generating facility 1.

In some embodiments, as illustrated in FIG. 2 for instance, the fatigue evaluation system 100 includes a flag setting part 30. When the total cumulative damage level $D_t$ of at least one evaluation point calculated by the total cumulative damage level calculation part 20 has exceeded the threshold value $D_{th}$ at least once, the flag setting part 30 is configured to turn on a flag indicating that the total cumulative damage level $D_t$ has exceeded the threshold value at the at least one evaluation point.

As a result, it is possible to specify the point of time when the total cumulative damage level $D_t$ of the at least one evaluation point has exceeded the threshold value on the basis of the state of the flag. Thus, for instance, it is possible to validate and specify the cause or the like that the total cumulative damage level $D_t$ of the at least one evaluation point has exceeded the threshold value $D_{th}$, by referring afterward to the operability or the like of the devices constituting the wind turbine power generating facility 1 at the point of time.

The flag setting part 30 illustrated in FIG. 2 may be configured to turn on the flag only when the total cumulative damage level $D_t$ of at least one evaluation point calculated by the total cumulative damage level calculation part 20 has exceeded the threshold value $D_{th}$ more than once in series. The flag setting part 30 may also be configured to turn off the flag for the evaluation point only when the total cumulative damage level $D_t$ of at least one evaluation point calculated by the total cumulative damage level calculation part 20 has fallen to or below the threshold value $D_{th}$ more than once in series.

The stress change information obtained by the measurement device 28 includes dispersion due to temporal disturbance. Thus, the calculated total cumulative damage level $D_t$ may also be affected by this dispersion. In this regard, with the above fatigue evaluation system 100, the flag indicating that the total cumulative damage level $D_t$ of the evaluation point has exceeded the threshold value is turned on only when the total cumulative damage level $D_t$ of at least one evaluation point calculated by the total cumulative damage level calculation part 20 has exceeded the threshold value $D_{th}$ more than once in series. Thus, it is possible to restrict the influence from the above dispersion from affecting the point of time when the flag is to be turned on. it is also possible to restrict the influence from the above dispersion from affecting the point of time when the flag is to be turned off.

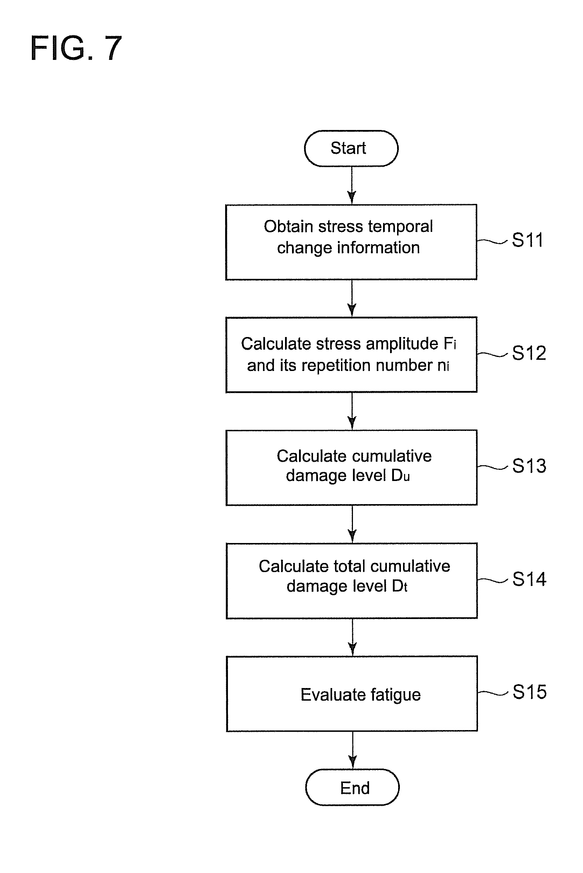

Next, referring to FIG. 7, an example of a fatigue evaluation flow of the above fatigue evaluation system 100 will be described.

First, in S11, the stress change information acquisition part 14 obtains, from the measurement device 28, the stress change information indicating the temporal change within a unit period of the stress generated at each evaluation point of the wind turbine power generating facility 1. Next, in S12, the stress amplitude information calculation part 16 calculates the stress amplitude $F_i$ and the repetition number $n_i$ of the stress amplitude $F_i$ of the stress generated on each evaluation point within a unit period (e.g. 10 minutes) by executing a rain flow process on the stress change information obtained by the stress change information acquisition part 14. Then, in S13, on the basis of the calculation result calculated by the stress amplitude information calculation part 16 and the information of the S-N linear chart corresponding to the material of each evaluation point read out from the storing device 32, the cumulative damage level calculation part 18 calculates the cumulative damage level $D_u$ of each evaluation point within the above unit period. Further, in S14, the total cumulative damage level calculation part 20 calculates the total cumulative damage level $D_t$ of the entire evaluation period at each evaluation point by adding up the calculation results calculated by the cumulative damage level calculation part 18 for the entire evaluation period. At this point, the total cumulative damage level calculation part 20 adds the cumulative damage level $D_u$ of the latest unit period to the previous value of the total cumulative damage level $D_t$ for each evaluation point every time a unit period elapses, thereby refreshing the total cumulative damage level $D_t$. Then, in S15, the fatigue evaluation part 22 evaluates fatigue of a part to which each evaluation point belongs in the wind turbine power generating facility 1 by comparing the total cumulative damage level $D_t$ calculated by the total cumulative damage level calculation part 20 to the threshold value $D_{th}$.

As described above, it is possible to calculate the appropriate total cumulative damage level $D_t$ taking account of the cumulative fatigue damage rule by calculating the total cumulative damage level $D_t$ of each evaluation point on the basis of the stress amplitude $F_i$ and the repetition number $n_i$ of the stress amplitude $F_i$ of the stress generated on each evaluation point within a unit period and the information of the S-N linear chart corresponding to the material of each evaluation point. Thus, it is possible to appropriately evaluate fatigue of a part to which each evaluation point belongs, on the basis of the cumulative fatigue damage rule, by comparing the total cumulative damage level $D_t$ to the threshold value.

Embodiments of the present invention were described in detail above, but the present invention is not limited thereto, and various amendments and modifications may be implemented.

The above fatigue evaluation system 100 may be included in the wind turbine power generating facility 1, or may be provided as a separate system from the wind turbine power generating facility 1. Further, only a part of the fatigue evaluation system 100 (for instance, the measurement device 28 in FIG. 2) may be disposed in the wind turbine power generating facility 1, and the other components of the cumulative damage level evaluation system 100 may be provided separately from the wind turbine power generating facility 1.

**Claims**

1. A fatigue evaluation system (100) for a wind turbine power generating facility (1), **characterized by** comprising:

   a stress change information acquisition part (14) configured to obtain stress change information which indicates a temporal change, within a unit period, of stress which is generated on each of evaluation points of the wind turbine power generating facility (1);
   a stress amplitude information calculation part (16) configured to calculate stress amplitude $F_i$ and a repetition number $n_i$ of the stress amplitude $F_i$ of the stress generated on each of the evaluating points within the unit period, on the basis of the stress change information obtained by the stress change information acquisition part (14);
   a cumulative damage level calculation part (18) configured to calculate a cumulative damage level $D_u$ of each of the evaluation points within the unit period, on the basis of the calculation result calculated by the stress amplitude information calculation part (16) and information of a S-N linear chart which corresponds to a material of each of the evaluation points;
   a total cumulative damage level calculation part (20) configured to add up calculation results of the cumulative damage level calculation part over an entire evaluation period to calculate a total cumulative damage level $D_t$ of the entire evaluation period for each of the evaluation points; and
   a fatigue evaluation part (22) configured to compare the total cumulative damage level $D_t$ at each of the evaluation points calculated by the total cumulative damage level calculation part (20) to a threshold value, and evaluate fatigue of a part of the wind turbine power generating facility (1) to which each of the evaluation points belongs,
   wherein the cumulative damage level calculation part (20) is configured to calculate the cumulative damage level $D_u$ from the following equation (1):

$$ D_u = \Sigma \frac{n_i}{N_i} \qquad (1) $$

   , where $N_i$ is a fracture repetition number which corresponds to the stress amplitude $F_i$, and which is calculated by the following equation (2):

$$N_i = N_{Ref} \times \left( \frac{F_{Ref}}{F_i} \right)^m \qquad (2)$$

, where $N_{Ref}$ is a fracture repetition number corresponding to a reference stress amplitude $F_{Ref}$, and m is a slope of a function which represents a relationship between the fracture repetition number $N_i$ and the stress amplitude $F_i$ in the information of the S-N linear chart.

2. The fatigue evaluation system (100) according to claim 1, further comprising
a warning signal generation part (24) configured to generate a warning signal when the total cumulative damage level $D_t$ of at least one of the evaluating points calculated by the total cumulative damage level calculation part (20) has exceeded the threshold value.

3. The fatigue evaluation system (100) according to claim 2,
wherein the warning signal generation part (24) is configured to generate the warning signal also when an increasing speed of the total cumulative damage level $D_t$ of at least one of the evaluation points calculated by the total cumulative damage level calculation part (20) has exceeded a tolerance.

4. The fatigue evaluation system (100) according to any one of claims 1 to 3,
wherein the threshold value is 1.

5. The fatigue evaluation system (100) according to any one of claims 1 to 3,
wherein the threshold value increases with an elapsed time after starting operation of the wind turbine power generating facility (1).

6. The fatigue evaluation system (100) according to any one of claims 1 to 5,
wherein the unit period is a period of not less than 1 minute and not more than 600 minutes.

7. The fatigue evaluation system (100) according to any one of claims 1 to 6,
wherein at least one of the evaluation points belongs to one of a top part of a tower (12a), a bottom part of the tower (12b), a rotor hub (4) or a rotor blade (2).

8. The fatigue evaluation system (100) according to claim 7,
wherein the wind turbine power generating facility (1) includes a plurality of rotor blades (2) mounted to the rotor hub (4),
wherein each of the rotor blades (2a; 2b; 2c) includes at least one of the evaluation points, and
wherein the fatigue evaluation system (100) further comprises a defect determination part (25) configured to determine a defect of each of the rotor blades (2a; 2b; 2c), by comparing the total cumulative damage level $D_t$ of the at least one evaluation point of each of the rotor blades (2a; 2b; 2c), calculated by the total cumulative damage level calculation part (20), to one another.

9. The fatigue evaluation system (100) according to any one of claims 1 to 8,
wherein the stress amplitude information calculation part (16) is configured to calculate the stress amplitude $F_i$ and repetition number $n_i$ of the stress amplitude $F_i$ of the stress generated on each of the evaluation points within the unit period, by executing a rain flow process on the stress change information obtained by the stress change information acquisition part (14).

10. The fatigue evaluation system (100) according to any one of claims 1 to 9, further comprising
a display part (26) configured to display a graph of the total cumulative damage level $D_t$ of each of the evaluation points calculated by the total cumulative damage level calculation part (20).

11. The fatigue evaluation system (100) according to any one of claims 1 to 10, further comprising a measurement device (28) for measuring the stress generated on each of the evaluation points of the wind turbine power generating facility (1),
wherein the stress change information acquisition part (14) is configured to obtain the stress change information from the measurement device (28).

**12.** The fatigue evaluation system (100) according to claim 5,
wherein the total cumulative damage level calculation part (20) is configured to refresh the total cumulative damage level $D_t$ every time the unit period elapses, by adding the cumulative damage level $D_u$ of a latest unit period to a previous value of the total cumulative damage level $D_t$ for each of the evaluation points, and
wherein the fatigue evaluation system (100) further comprises a flag setting part (30) configured to, when the total cumulative damage level $D_t$ of at least one of the evaluation points calculated by the total cumulative damage level calculation part (20) has exceeded the threshold value at least once, turn on a flag which indicates that the total cumulative damage level $D_t$ has exceeded the threshold value at the at least one evaluation point.

**13.** The fatigue evaluation system (100) according to claim 12, further comprising a measurement device (28) for measuring the stress generated on each of the evaluation points of the wind turbine power generating facility (1),
wherein the stress change information acquisition part (14) is configured to obtain the stress change information from the measurement device (28), and
wherein the flag setting part (30) is configured to, only when the total cumulative damage level $D_t$ of at least one of the evaluation points calculated by the total cumulative damage level calculation part has exceeded the threshold value more than once in series, turn on a flag which indicates that the total cumulative damage level $D_t$ has exceeded the threshold value for the at least one evaluation point.

**14.** The fatigue evaluation system (100) according to claim 13,
wherein the flag setting part (30) is configured to, only when the total cumulative damage level $D_t$ of at least one evaluation point calculated by the total cumulative damage level calculation part (20) has fallen to the threshold value or less, more than once in series, turn off the flag for the at least one evaluation point.

**15.** A wind turbine power generating facility (1), comprising:

a rotor (4) configured to rotate upon receiving wind energy;
a generator (8) to which rotational force of the rotor (4) is transmitted; and
**characterized by** comprising the fatigue evaluation system (100) according to any one of claims 1 to 14.

# FIG. 1

2(2a)

1

6

28c

2a_r

28f

8

10

4

28d

2b_r

12a

28a

28e

2c_r

2(2b)

2(2c)

12

28b

12b

# FIG. 2

100

Lifetime evaluation system

| | | | |
|---|---|---|---|
| Stress change information acquisition part | 14 | Defect determination part | 25 |
| Stress amplitude information calculation part | 16 | Display part | 26 |
| Cumulative damage level calculation part | 18 | Measurement device | 28 |
| Total cumulative damage level calculation part | 20 | Flag setting part | 30 |
| Fatigue evaluation part | 22 | Storing device | 32 |
| Warning signal generation part | 24 | | |

# FIG. 3

# FIG. 4

Threshold $D_{th}$

1

1

0

Design lifetime

Elapsed time after start of operation

# FIG. 5

Threshold $D_{th}$

$\lambda$

0

A    B    A    B

Elapsed time after start of operation

# FIG. 6

# FIG. 7

```
          ┌─────────────┐
          │    Start    │
          └──────┬──────┘
                 │
                 ▼
    ┌──────────────────────────┐
    │  Obtain stress temporal  │ ～ S11
    │   change information     │
    └────────────┬─────────────┘
                 │
                 ▼
    ┌──────────────────────────┐
    │ Calculate stress         │ ～ S12
    │ amplitude $F_i$          │
    │ and its repetition       │
    │ number $n_i$             │
    └────────────┬─────────────┘
                 │
                 ▼
    ┌──────────────────────────┐
    │   Calculate cumulative   │ ～ S13
    │   damage level $D_u$     │
    └────────────┬─────────────┘
                 │
                 ▼
    ┌──────────────────────────┐
    │ Calculate total          │ ～ S14
    │ cumulative               │
    │ damage level $D_t$       │
    └────────────┬─────────────┘
                 │
                 ▼
    ┌──────────────────────────┐
    │    Evaluate fatigue      │ ～ S15
    └────────────┬─────────────┘
                 │
                 ▼
          ┌─────────────┐
          │     End     │
          └─────────────┘
```

Europäisches
Patentamt

European
Patent Office

Office européen
des brevets

# EUROPEAN SEARCH REPORT

Application Number

EP 15 15 9764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/030089 A1 (WICKSTROEM ANDERS [SE]) 30 January 2014 (2014-01-30) * paragraphs [0042] - [0048]; figures 3-7 * ----- | 1-11,15 | INV. F03D11/00 |
| X | Patrick Ragan ET AL: "Comparing Estimates of Wind Turbine Fatigue Loads using Time-Domain and Spectral Methods MULTI-SCIENCE PUBLISHING COMPANY 5 WATES WAY @BULLET BRENTWOOD @BULLET ESSEX CM15 9TB @BULLET UK Comparing Estimates of Wind Turbine Fatigue Loads using Time-Domain and Spectral Methods", , 1 January 2007 (2007-01-01), XP055193123, Retrieved from the Internet: URL:http://www.ce.utexas.edu/prof/manuel/p apers/raganmanuel_windengineering.pdf [retrieved on 2015-06-02] * the whole document * ----- | 1-11,15 | |
| X | HAMMERUM K ET AL: "A fatigue approach to wind turbine control", JOURNAL OF PHYSICS: CONFERENCE SERIES, INSTITUTE OF PHYSICS PUBLISHING, BRISTOL, GB, vol. 75, no. 1, 1 July 2007 (2007-07-01), page 12081, XP020125154, ISSN: 1742-6596, DOI: 10.1088/1742-6596/75/1/012081 * the whole document * ----- | 1,6,7,9, 15 | TECHNICAL FIELDS SEARCHED (IPC) F03D |
| X | US 2013/270827 A1 (COUCHMAN IAN [GB] ET AL) 17 October 2013 (2013-10-17) * paragraphs [0085] - [0091], [0093] - [0102], [0107]; figures 8,9,10,12 * ----- -/-- | 1,2,4-7, 9,11 | |

The present search report has been drawn up for all claims

| Place of search | Date of completion of the search | Examiner |
|---|---|---|
| The Hague | 3 June 2015 | Biloen, David |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 15 15 9764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/138267 A1 (VITTAL SAMEER [US] ET AL) 3 June 2010 (2010-06-03)<br>* paragraphs [0020], [0032], [0033] * | 1-3 | |
| X | EP 2 053 241 A1 (ECOTECNIA EN RENOVABLES SL [ES]) 29 April 2009 (2009-04-29)<br>* paragraphs [0001], [0015], [0016], [0023], [0038] * | 1,2,9, 12-14 | |
| A | FATEMI A ET AL: "Cumulative fatigue damage and life prediction theories: a survey of the state of the art for homogeneous materials",<br>INTERNATIONAL JOURNAL OF FATIGUE, BUTTERWORTH SCIENTIFIC LTD, GUILDFORD, GB, vol. 20, no. 1,<br>1 January 1998 (1998-01-01), pages 9-34,<br>XP026991322,<br>ISSN: 0142-1123<br>[retrieved on 1998-01-01]<br>* the whole document * | 1-15 | |

TECHNICAL FIELDS
SEARCHED (IPC)

The present search report has been drawn up for all claims

| Place of search | Date of completion of the search | Examiner |
|---|---|---|
| The Hague | 3 June 2015 | Biloen, David |

## ANNEX TO THE EUROPEAN SEARCH REPORT
## ON EUROPEAN PATENT APPLICATION NO.

EP 15 15 9764

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2015

| Patent document cited in search report | | Publication date | Patent family member(s) | | Publication date |
|---|---|---|---|---|---|
| US 2014030089 | A1 | 30-01-2014 | NONE | | |
| US 2013270827 | A1 | 17-10-2013 | CN | 103328818 A | 25-09-2013 |
| | | | EP | 2622216 A2 | 07-08-2013 |
| | | | GB | 2491548 A | 12-12-2012 |
| | | | US | 2013270827 A1 | 17-10-2013 |
| | | | WO | 2012041326 A2 | 05-04-2012 |
| US 2010138267 | A1 | 03-06-2010 | CN | 102022264 A | 20-04-2011 |
| | | | EP | 2290597 A2 | 02-03-2011 |
| | | | US | 2010138267 A1 | 03-06-2010 |
| EP 2053241 | A1 | 29-04-2009 | AU | 2008314694 A1 | 30-04-2009 |
| | | | BR | PI0818383 A2 | 22-04-2015 |
| | | | CA | 2701979 A1 | 30-04-2009 |
| | | | CN | 101835974 A | 15-09-2010 |
| | | | EP | 2053241 A1 | 29-04-2009 |
| | | | EP | 2212552 A1 | 04-08-2010 |
| | | | JP | 5242694 B2 | 24-07-2013 |
| | | | JP | 2011501172 A | 06-01-2011 |
| | | | US | 2010310373 A1 | 09-12-2010 |
| | | | WO | 2009053365 A1 | 30-04-2009 |

EPO FORM P0459

For more details about this annex : see Official Journal of the European Patent Office, No. 12/82

**EP 2 993 344 A1**

## REFERENCES CITED IN THE DESCRIPTION

**Patent documents cited in the description**

- EP 1760311 A